# EUROPEAN PATENT APPLICATION

(11) **EP 0 904 819 A1**
(43) Date of publication of application: **31.03.1999**
(21) Application number: 98118111.8
(22) Date of filing: 24.09.1998
(51) Int. Cl.: B01D 29/01, B01D 29/03, B01D 29/07, B01D 29/11, B01D 29/21, B01D 29/23, B01D 29/33, B01D 29/35, B01D 39/16

(54) **Pleats filter**

(30) Priority: 25.09.1997 JP 278209/97
(71) Applicant: Chisso Corporation, Osaka-shi Osaka-fu (JP)
(72) Inventor: Fukuda, Shigenori, Moriyama-shi, Shiga (JP); Yamaguchi, Osamu, Moriyama-shi, Shiga (JP)
(74) Representative: Müller-Boré & Partner Patentanwälte

(57) **Abstract**

A pleats filter having a long filtration life and a stable filtration accuracy is provided by comprising a sheet produced by pleating a mixed-fineness mixed non-woven fiber bulk consisting of thermoplastic fibers having different fiber diameters in which the intersections of fibers are heat-bonded and the gradient of fiber diameters is formed from the top layer to the bottom layer.

## Description

The present invention relates to a pleats filter, and more particularly to a pleats filter which excels in stability of filtration accuracy and which has a prolonged filter life.

As filter media for filtering almost 100% of submicron to several-micron particles, there have mainly been used micro-porous sheets of polymer materials and non-woven fabrics produced from ultra-fine fibers having a fiber diameter of several micrometers or less. A well-known example of a micro-porous membrane is a membrane sheet produced by stretching a polytetrafluoroethylene (PTFE) sheet. A well-known example of a non-woven fabric is a polypropylene ultra-fine fiber non-woven fabric produced by melt-blowing followed by compacting by a heated calendar roll.

Since these filter media have poor liquid permeation due to their extremely small pore diameters, and since particles become trapped on the surface of the filter media, the surface of the filter media is easily coated by materials to be filtered, and the filter media quickly become clogged. When a filter is fabricated from such a filter medium, usually a type of filter known as a pleats filter having an increased filtration area is fabricated by pleating the filter medium, rounding the filter medium and sealing both ends of the filter medium by heating, inserting a cylindrical porous core into the center of the rounded and sealed filter medium, and affixing a gasket on either end of the filter medium and the core to yield a cylindrical filter.

In recent years, the filtration of liquids in the electronics, food, biochemical, and pharmaceutical industries has required filters having high ability of removing ultra-fine particles and bacteria. Corresponding to such requirements, demand for pleats filters has increased, and filters having longer filtration life have been demanded. However, if the number of pleats in a filter is increased, the gap between the filter media narrows and liquid permeation deteriorates, resulting in shorter filtration life. Even if the thickness of the filter medium is decreased so as not to narrow the gap when the number of pleats is increased, the pore diameter must be made smaller than that of thicker filter media in order to maintain high accuracy with thin filter media, easily causing surface clogging. As the result, the filtration life does not increase as expected.

The object of the present invention is to increase filtration life, which is a problem of prior art techniques described above, and to provide a pleats filter having improved strength of filter media and improved stability of filtration accuracy.

The inventors of the present invention conducted repeated examinations for solving the above problems, and found that the above object was achieved by the following constitution.

According to a first aspect of the present invention, there is provided a pleats filter produced by folding an aggregate of a mixed-fineness non-woven fabric comprising thermoplastic fibers of different fiber diameters, wherein the intersections of the sheet of said mixed-fineness non-woven fabric are heat-bonded, and the fiber diameters are graded from the top layer to the bottom layer of the sheet.

According to a second aspect of the present invention, there is provided a pleats filter according to the first aspect, wherein said thermoplastic fiber is a composite fiber comprising a low melting point resin and a high melting point resin having a melting point difference of 10°C or more.

According to a third aspect of the present invention, there is provided a pleats filter according to the first aspect, wherein said thermoplastic fiber is a mixed fiber.

According to a fourth aspect of the present invention, there is provided a pleats filter according to any of the first through the third aspects, wherein said sheet of the aggregate of a mixed-fineness non-woven fabric comprises fibers whose diameters range from 0.1 to 20 µm.

According to a fifth aspect of the present invention, there is provided a pleats filter according to any of the first through the fourth aspects, wherein the ratio of fiber diameter on the top layer of said sheet of the aggregate of a mixed-fineness non-woven fabric to that on the bottom layer is 2 to 20.

According to a sixth aspect of the present invention, there is provided a composite pleats filter comprising an aggregate of a mixed-fineness non-woven fabric according to any of the first through the fifth aspects, which is laminated and integrated with at least one member selected from a group consisting of a micro-porous membrane, a porous glass fiber sheet, and a long-fiber non-woven fabric.

The present invention will be described in detail below.

In the present invention, fibers constituting the filter medium for the pleats filter have a gradient of fiber diameter from the top layer toward the bottom layer. That is, the gradient of pore diameters employed to perform the filtering function is formed by imparting a gradient of fiber diameters from the top layer to the bottom layer. This results in improved filtration function in the deep layer and a longer filtration life by trapping particles in the internal part of the filter medium as well as in the surface layer. Also, by employment of composite or mixed fibers consisting of a high melting point resin and a low melting point resin, the intersections of fibers are heat-bonded and integrated by heat treatment. As the result, the strength of the filter medium increases, deformation of pleats by the pressure of passing liquids is prevented, and stable filtration accuracy is achieved by restricting the movement of fibers.

Composite fibers of the present invention include sheath-and-core type fibers and eccentric sheath-and-core type fibers employing a high melting point resin for the core and a low melting point resin for the sheath, and side-by-side type fibers produced from these resins. Mixed fibers are fibers in which fibers of a high melting point resin and fibers of a low melting point resin exist independently. These composite fibers and mixed fibers may be produced through use of general melt spinning, melt blowing, spun bonding, and the like. In each method there may be incorporated methods for splitting fibers, or in methods for producing sea-and-island type fibers, methods for melting the sea components. Mixed fibers in which composite fibers are mixed may also be used.

Examples of high melting point resins and low melting point resins include thermoplastic resins such as polypropylene, polyethylene, poly-4-methylpentene, crystalline copolymers of propylene and other α-olefins, polyethylene terephthalate, polybutylene terephthalate, polyamides, and polycarbonates. Composite or mixed fibers are formed by combination of resins selected from these resins such that the difference in melting points is 10°C or more, preferably 15°C or more.

The composite or mix ratio of the high melting point resin to the low melting point resin preferably falls within the range between 80:20 and 20:80 (by weight). If the proportion of the low melting point resin is lower than the above range, the number of heat-bonded points of fibers decreases, and sufficient strength cannot be obtained. On the other hand, if the proportion of the low-melting-point resin is higher than the above range, the quantity of the resin melted during the heat treatment for bonding fibers to each other increases and the molten resin aggregates to produce portions of large and small fiber diameters, resulting in variation in fiber diameter. Therefore, more preferably the ratio falls within the range between 70:30 to 30:70 (by weight).

The generally used method for imparting the gradient of fiber diameters to a non-woven fiber bulk is a method in which after several types of non-woven fiber bulks of different fiber diameters are produced, the non-woven fiber bulks are stacked and laminated so that the fiber diameters change sequentially, then heat-treated with a through-air type dryer to melt the low melting point resin and compacted with a heated calendar roll at the exit of the dryer, so that the layers become completely fused.

There may also be used a method in which the non-woven fiber bulks are heat-treated with a far infrared heater and then compacted with a heated calendar roll.

Before lamination and compacting the non-woven fiber bulks have a METSUKE (weight per unit area) of 5 to 100 g/m². If the METSUKE is low, the effect of gradient in fiber diameters will be lowered, and if the METSUKE is high, the total thickness of the mixed-fineness mixed non-woven fiber bulk sheet after lamination will be large, resulting in decrease in the number of pleats of the pleats filter. If such a sheet is excessively compacted to make it thin, liquid permeation will lower and the effect of the fiber diameter gradient will be lowered. Therefore, the METSUKE preferably falls within the range of 15 to 90 g/m².

The fiber diameters are preferably 0.1 to 20 µm, and fibers are mixed so that after lamination the fiber diameter ratio of the top layer to the bottom layer becomes 2 to 20. If the ratio is smaller than 2, the effect of prolonging life lowers, but even if the ratio is larger than 20, the effect of prolonging life no longer increases. The fiber diameters in the middle layers are selected to be equal to the fiber diameter of the top or bottom layer, or somewhere between the fiber diameters of these layers. These layers may be laminated so that fiber diameters change according to a certain gradient, or may be laminated to have a biased fiber diameter gradient toward either the larger-diameter side or the smaller-diameter side.

Example methods of combining fibers include the lamination of non-woven fiber bulks selected from a non-woven fiber bulk consisting of composite fibers produced by the spun bonding spinning method or mixed fibers produced by the spun bonding spinning method, a non-woven fiber bulk consisting of split fibers produced by melt spinning, and a non-woven fiber bulk consisting of composite fibers produced by the melt blowing spinning method or mixed fibers produced by the melt blowing spinning method. In the melt blowing spinning method, a non-woven fiber bulk having a fiber diameter of several microns or less can be obtained with relative ease, making this method preferred for producing a non-woven fabric used in the smallest fineness layer.

Although the number of non-woven fiber bulks used for forming the gradient of fiber diameters falls within the range between 2 and 10, sufficient effect cab be obtained within the range between 2 and 6, because the life prolonging effect no longer increases even if the number of layers is further increased. The METSUKE of each non-woven fiber bulk to be laminated is selected from the above range so as to make METSUKE after lamination 30 to 300 g/m², and the bulk density of the non-woven fabric is made 0.1 to 0.6 g/cm³ by compacting with a heated calendar roll. If the bulk density of the non-woven fabric is less than 0.1 g/cm³, ultra-fine particles cannot be trapped sufficiently, and if it exceeds 0.6 g/cm³, gaps between fibers will decrease and liquid permeation will lower.

The compacted conditions may be differentiated by first compacting the finer side non-woven fiber bulks, then overlaying them with coarser side non-woven fiber bulks, and compacting the bulks together. However, due to the gradient of the fineness of fibers constituting the non-woven fabrics, the pleats filter of the present invention yields the effects of the present invention such as prolonged filtration life even if there is no difference in the density of the non-woven fabrics, and is superior to non-woven fabrics having a density gradient density but no fineness gradient.

Although the pleats filter of the present invention has prolonged filtration life when a mixed-fineness mixed non-woven fiber bulk sheet is used as the intermediate layer to handle high-accuracy filtration, there may also be used a method in which a micro-porous membrane or a porous glass fiber sheet is used as the intermediate layer and a mixed-fineness mixed non-woven fiber bulk sheet is laminated on the outer layer to form the pleats filter. In this case also, coarse particles are trapped by the mixed-fineness mixed non-woven fiber bulk sheet, decreasing the number of particles trapped by the micro-porous membrane and the like, and delaying surface clogging of the micro-porous membrane. Also, since the mixed-fineness-mixed non-woven fiber bulk sheet itself is resistant to surface clogging due to the gradient of pore diameters, it contributes to prolonging filtration life. Furthermore, in the case of a material having a flexible micro-porous membrane, processability and strength are increased by lamination.

As a method for laminating the micro-porous membrane and the like on the mixed-fineness mixed non-woven fiber bulk sheet, there can be used a method in which the mixed-fineness mixed non-woven fiber bulk sheet is compacted together with the micro-porous membrane by use of a heated calendar roll.

Moreover, as in conventional pleats filters, if long-fiber non-woven fabrics such as spun bonded non-woven fabrics or nets may be laminated on the top and bottom of the filter medium to form a pleats filter, there can be prevented the lowering of liquid permeation due to contact between pleats.

The present invention will be described in detail below by reference to examples and comparative examples; however, the present invention is not limited to these examples. The methods of measurement used in the following examples will be described below.

### Examples

### • Mean fiber diameter

Electron microscope images of fibers constituting the non-woven fiber bulk were produced in an image processor. The diameters of 100 fibers were measured, and their mean value was regarded the mean fiber diameter.

### • Pressure loss

A filter was installed on the housing of a circulation-type filtration accuracy tester, and water was circulated at a flow rate of 30 liters per minute. The difference in pressure between the inlet and outlet of the housing was regarded the pressure loss.

### • Filtration accuracy

A filter was installed on the housing of the above circulation-type filtration accuracy tester, and while water was circulated at a flow rate of 30 liters per minute, 3 g/min of AC Fine Test Dust (ACFTD, medium diameter: 6.6-8.6 µm) was added, and the liquid before and after passing through the filter was sampled 3 minutes after the start of circulation and when the pressure difference reached 0.15 MPa. The particle size distribution of each liquid was measured through use of a light interception particle size distribution tester to determine the collection efficiency, and the particle diameter at which 99.9% of particles was collected was regarded the filtration accuracy.

### • Filtration life

A filter was installed on the housing of the above circulation-type filtration accuracy tester, and while water was circulated at a flow rate of 30 liters per minute, 2 g/min of AC Fine Test Dust was added, and the difference in pressure between the inlet and the outlet of the housing was measured. Time until the pressure difference became 0.2 MPa was regarded the filtration life.

### Example 1

Polypropylene (MFR: 102 g/10 min (230°C), mp.: 162°C) serving as a high melting point resin, and a polypropylene copolymer (3.5 %,by weight ethylene, 2.5 % by weight butene-1, MFR: 95 g/10 min (230°C), mp.: 138°C) serving as a low-melting-point resin were extruded from a side-by-side spinning nozzle for melt blowing (hole diameter: 0.3 mm, pitch: 1.0 mm, 501 holes) at a spinning temperature of 300°C and a component ratio of 60:40 (by weight), and were melt-blown by heated air of 360°C. By adjusting the pressure of the heated air and the quantities of total polymer discharge, there were formed 5 types of non-woven fabrics having mean fiber diameters of 1.1, 3.1, 5.2, 9.6, and 14.3 µm and a METSUKE (weight per unit area) of 40, 40, 30, 40, and 50 g/m², respectively. The bulk density of each non-woven fabric was almost constant at 0.40 to 0.47 g/cm³. These non-woven fabrics were stacked and laminated in sequence from a non-woven fabric having a thicker fiber diameter, passed through a through-air type dryer heated to 135°C for melting the low-melting-point resin, and compacted with a calendar roll of a roller temperature of 100°C at the exit of the dryer, to form a mixed-fineness mixed filament yarn non-woven fiber bulk sheet having a METSUKE of 200 g/m² and a non-woven fabric bulk density of 0.45 g/cm³. This sheet was cut to a width of 240 mm, pleated to a pleat width of 13 mm, and wrapped around a polypropylene porous cylindrical core with the thicker fiber layer towards the outer side so as to comprise 120 pleats. The ends of the mixed-fineness mixed filament yarn non-woven fiber bulk sheet were sealed by heating, and a gasket was affixed to either end of the cylindrical shape to produce a pleats filter having an inner diameter of 30 mm, an outer diameter of 66 mm, and a length of 250 mm. The results of measurement are shown in Table 1.

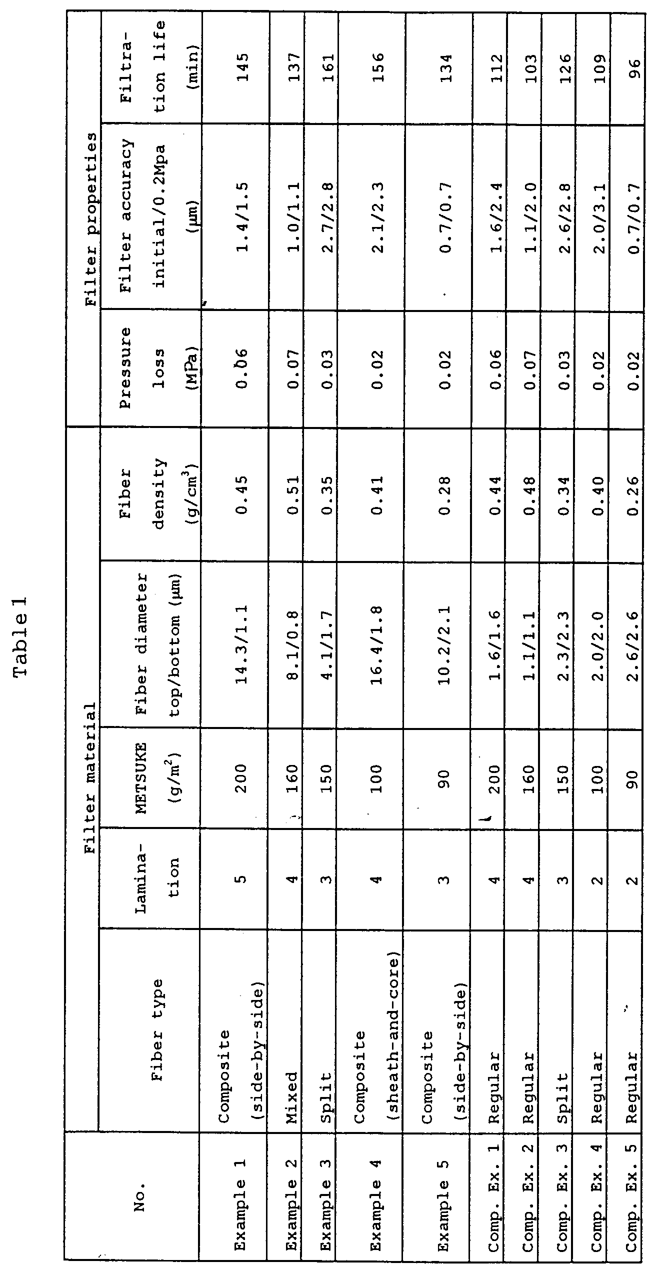

### Comparative Example 1

Polypropylene (MFR: 102 g/10 min (230°C), mp.: 162°C) was extruded from a regular spinning nozzle for melt blowing (hole diameter: 0.3 mm, pitch: 1.0 mm, 501 holes) at a spinning temperature of 300°C, and was melt-blown by heated air of 360 °C to form a non-woven fabric having a mean fiber diameter of 1.6 µm, a METSUKE of 50 g/m², and a bulk density of 0.44 g/cm³. Four sheets of this non-woven fabric were stacked and laminated, passed through a through-air type dryer heated to 135°C, then compacted with a calendar roll of a roller temperature of 100 °C at the exit of the dryer, to form a non-woven fiber bulk sheet having a METSUKE of 200 g/m² and a non-woven fabric bulk density of 0.44 g/cm³. This sheet was processed in the same way as in Example 1 to form a pleats filter having an inner diameter of 30 mm, an outer diameter of 66 mm, and a length of 250 mm. The results of measurement are shown in Table 1.

When the filters are compared, the filter of Example 1 is found to have a usable life longer than that of the filter of Comparative Example 1 comprising a filter medium having a constant fiber diameter. Also, since fiber intersections are heat-bonded and fibers are not shifted, the bore diameters are stable, and filtration accuracy of the filter of Example 1 is lowered little even if pressure loss increases.

### Example 2

Polypropylene (MFR: 102 g/10 min (230°C), mp.: 162°C) serving as a high melting point resin, and a polypropylene copolymer (3.5 % by weight ethylene, 2.5 % by weight butene-1, MFR: 95 g/10 min (230°C), mp.: 138°C) serving as a low-melting-point resin were extruded from a mixed spinning nozzle for melt blowing which extrudes two components alternately from spinning holes (hole diameter: 0.3 mm, pitch: 1.0 mm, 501 holes) at a spinning temperature of 300°C and a component ratio of 50:50 (by weight), and were melt-blown by heated air of 360°C. By adjusting the pressure of the heated air and the quantities of total polymer discharge, there were formed 4 types of non-woven fabrics having mean fiber diameters of 0.8, 1.5, 4.2, and 8.1 µm, and METSUKE (weight per unit area) of 30, 30, 50, and 50 g/m², respectively. The bulk density of each non-woven fabric was almost constant at 0.49 to 0.52 g/cm³. These non-woven fabrics were stacked and laminated in sequence from a non-woven fabric having a thicker fiber diameter, passed through a through-air type dryer heated to 135°C for melting the low melting point resin, and compacted with a calendar roll of a roller temperature of 100°C at the exit of the dryer, to form a mixed-fineness mixed filament yarn non-woven fiber bulk sheet having a METSUKE of 160 g/m² and a non-woven fabric bulk density of 0.51 g/cm³. A polypropylene spun-bonded non-woven fabric having a METSUKE of 200 g/m2, a mean fiber diameter of 22.3 µm and a bulk density of 0.08 g/m³ was overlaid on both sides of this sheet, and the sheet was processed in the same way as in Example 1 to form a pleats filter having an inner diameter of 30 mm, an outer diameter of 66 mm, and a length of 250 mm. The results of measurement are shown in Table 1.

### Comparative Example 2

The same material as in Comparative Example 1 was extruded from the same nozzle as in Comparative Example 1 at a spinning temperature of 300°C, and was melt-blown by heated air of 360 °C to form a non-woven fabric having a mean fiber diameter of 1.1 µm and a METSUKE of 40 g/m². As the first stage of the compacting process, 3 sheets of this non-woven fabric were stacked and laminated, passed through a through-air type dryer heated to 135°C, and then compacted with a calendar roll of a roller temperature of 100°C at the exit of the dryer. Next, as the second stage of the compacting process, a sheet of untreated non-woven fabric was overlaid on a sheet of the non-woven fabric compacted in the first stage, and the sheets were compacted as in the first stage. By decreasing the pressure of the calendar roll from the first stage while maintaining the same temperature condition, a non-woven fiber bulk sheet compacted in the first stage came to have a non-woven fabric bulk density of 0.55 g/cm³, and the non-woven fabric compacted in the second stage came to have a non-woven fabric bulk density of 0.20 g/cm³. The sheet was processed in the same way as in Example 2 to form a pleats filter having an inner diameter of 30 mm, an outer diameter of 66 mm, and a length of 250 mm. The results of measurement are shown in Table 1.

When this filter is compared with that of Example 2, the filter of Example 2 is found to excel in both usable life and the stability of filtration accuracy, even though the filter of Comparative Example 2 has a density gradation.

### Example 3

Polypropylene (MFR: 20 g/10 min (230°C), mp.: 164°C) serving as a high melting point resin, and high density polyethylene (MFR: 16 g/10 min (190°C), mp.: 135°C) serving as a low melting point resin were extruded from a radial-type 8-split spinning nozzle (hole diameter: 0.6 mm, 800 holes) at a spinning temperature of 270°C and a component ratio of 50:50 (by weight), to form a non-drawn yarn of 12.0 denier by melt spinning. This yarn was drawn 3-fold, 5-fold, and 8-fold to obtain 3 types of drawn yarns of 4, 2.4, and 1.5 denier. Each yarn was subjected to crimping to form 13 crimps/25 mm, and cut to produce staple fibers of a length of 51mm. Each type of fibers was processed with a carding machine, and was split by the water-jet needle process to obtain non-woven fabrics having mean fiber lengths of 4.1, 2.5, and 1.7 µm, respectively, and a METSUKE of 50 g/m². The bulk density of each non-woven fabric was almost constant at 0.38 to 0.42 g/cm³. These non-woven fabrics were stacked and laminated in sequence from a non-woven fabric having a thicker fiber diameter, passed through a through-air type dryer heated to 135°C, and compacted with a calendar roll of a roller temperature of 100°C at the exit of the dryer, to form a mixed-fineness mixed filament yarn non-woven fiber bulk sheet of a width of 500 mm, a METSUKE of 150 g/m², and a non-woven fabric bulk density of 0.35 g/cm³. The same spun-bonded non-woven fabric and the same processing method as in Example 2 were used to form a pleats filter having an inner diameter of 30 mm, an outer diameter of 66 mm, and a length of 250 mm. The results of measurement are shown in Table 1.

### Comparative Example 3

The same procedures and the same materials as in Example 3 were used to form fibers. The resultant non-drawn yarn having a fineness of 12.0 denier was drawn 6-fold to form a drawn yarn having a fineness of 2.0 denier. This yarn was subjected to crimping to form 13 crimps/25 mm, and cut to produce staple fibers of a length of 51 mm. These fibers were processed with a carding machine, and were split by the water-jet needle process to obtain a non-woven fabric having a mean fiber length of 2.3 µm and a METSUKE of 50 g/m². This non-woven fabric was compacted by the same process and under the same conditions as in Comparative Example 2 to form a non-woven fiber bulk sheet having a width of 500 mm and a METSUKE of 150 g/m². The non-woven bulk sheet compacted in the first stage had a non-woven fabric bulk density of 0.52 g/cm³, and the non-woven fabric compacted in the second stage had a bulk density of 0.18 g/cm³. The same spun-bonded non-woven fabric and the same processing method as in Example 2 were used to form a pleats filter having an inner diameter of 30 mm, an outer diameter of 66 mm, and a length of 250 mm. The results of measurement are shown in Table 1.

When this filter is compared with that of Example 3, the filter of Example 3 having a fiber diameter gradient is found to have a longer filtration life, although the filter of Comparative Example 3 is found to excel in stability of filtration accuracy because it comprises a split fiber consisting of a high melting point resin and a low melting point resin.

### Example 4

Polypropylene (MFR: 102 g/10 min (230°C), mp.: 162°C) serving as a high melting point resin, and a polypropylene copolymer (3.5 % by weight ethylene, 2.5 % by weight butene-1, MFR: 95 g/10 min (230°C), mp.: 138°C) serving as a low melting point resin were extruded from a sheath-and-core spinning nozzle for melt blowing (hole diameter: 0.3 mm, pitch: 1.0 mm, 501 holes) at a spinning temperature of 300°C and a component ratio of 70:30 (by weight), and were melt-blown by heated air of 360°C. By adjusting the pressure of the heated air and the quantities of total polymer discharge, there were formed 4 types of non-woven fabrics having mean fiber diameters of 1.8, 4.5, 10.2, and 16.4 µm, and METSUKE of 30, 30, 20, and 20 g/m², respectively. The bulk density of each non-woven fabric was almost constant at 0.40 to 0.45 g/cm³. These non-woven fabrics were laminated in sequence from a non-woven fabric having a thicker fiber diameter, passed through a through-air type dryer heated to 135°C for melting the low melting point resin, and compacted with a calendar roll of a roller temperature of 100 °C at the exit of the dryer, to form a mixed-fineness mixed filament yarn non-woven fiber bulk sheet having a METSUKE of 100 g/m² and a non-woven fabric bulk density of 0.41 g/cm³. This sheet was cut to a width of 240 mm, a sheet of polypropylene net of the same width having a fineness of 250 denier and a distance between warp and weft of 2 mm was overlaid on either side of the cut sheet, and the same procedures as in Example 1 were used to produce a pleats filter having an inner diameter of 30 mm, an outer diameter of 66 mm, and a length of 250 mm. The results of measurement are shown in Table 1.

### Comparative Example 4

The same materials as in Comparative Example 1 were extruded from the same nozzle as in Comparative Example 1 at a spinning temperature of 300°C, and were melt-blown by heated air of 360°C to form a non-woven fabric having a mean fiber diameter of 2.0 µm and a METSUKE of 50 g/m². Two sheets of this non-woven fabric were stacked and laminated, passed through a through-air type dryer heated to 135°C, and compacted with a calendar roll of a roller temperature of 100°C at the exit of the dryer, to form a non-woven fiber bulk sheet having a METSUKE of 100 g/m² and a non-woven fabric bulk density of 0.40 g/cm³. This sheet was processed in the same way as in Example 4 to form a pleats filter having an inner diameter of 30 mm, an outer diameter of 66 mm, and a length of 250 mm. The net used in Example 4 was not used. The results of measurement are shown in Table 1.

When this filter was compared with that of Example 4, the filter of Example 4 was found to excel in both stability of filtration accuracy and filtration life. Also, the filter of Comparative Example 4 was found to have irregularity of pleats at the time of measurement, and the filter medium was found to have a low mechanical strength.

### Example 5

Polyethylene terephthalate (mp.: 253°C) serving as a high melting point resin, and an ethyleneglycol terephthalate-isophthalate copolymer (mp.: 160°C) serving as a low melting point resin were extruded from a side-by-side spinning nozzle for melt blowing (hole-diameter: 0.3 µm, pitch: 1.0 mm, 501 holes) at a spinning temperature of 330°C and a component ratio of 50:50 (by weight), and were melt-blown by heated air of 400 °C. By adjusting the pressure of the heated air and the quantities of total polymer discharge, there were formed 3 types of non-woven fabrics having mean fiber diameters of 2.5, 5.2, and 10.2 µm, and METSUKE of 30, 30, and 30 g/m², respectively. The bulk density of each non-woven fabric was almost constant at 0.27 to 0.31 g/cm³. These non-woven fabrics were stacked and laminated in sequence from a non-woven fabric having a thicker fiber diameter and passed through a through-air type dryer heated to 150°C for melting the low melting point resin, a polytetrafluoroethylene membrane sheet (pore diameter: 0.7 µm, thickness: 0.8 mm) was overlaid on the non-woven fabrics at the exit of the dryer, and the non-woven fabrics were compacted with a calendar roll of a roller temperature of 150°C. The mixed-fineness mixed filament yarn non-woven fiber bulk sheet from which the membrane sheet was removed had a METSUKE of 90 g/m² and a non-woven fabric bulk density of 0.28 g/cm³. After this filter medium was cut to a width of 240 mm, the same spun-bonded non-woven fabric and the same processing method as in Example 2 were used to form a pleats filter having an inner diameter of 30 mm, an outer diameter of 66 mm, and a length of 250 mm. The results of measurement are shown in Table 1.

### Comparative Example 5

Polyethylene terephthalate (mp.: 253°C) was extruded from the same nozzle as in Example 1 at a spinning temperature of 330°C, and was melt-blown by heated air of 400°C, to produce a non-woven fabric having a mean fiber diameter of 2.6 µm and a METSUKE of 45 g/m². Two sheets of this non-woven fabric were stacked and laminated, passed through a through-air type dryer heated to 150°C, the same membrane sheets as in Example 5 were overlaid thereon, and the non-woven fabric was compacted with a calendar roll of a roller temperature of 150°C at the exit of the dryer. The non-woven fabric from which the membrane sheet had been removed had a METSUKE of 90 g/m², and each layer had a non-woven fabric bulk density of 0.26 g/cm³. The same spun-bonded non-woven fabric as in Example 2 was overlaid on the non-woven fabric, and the same procedures as in Example 2 was performed to form a pleats filter having an inner diameter of 30 mm, an outer diameter of 66 mm, and a length of 250 mm. The results of measurement are shown in Table 1.

When this filter is compared with that of Example 5, the filter of Example 5 is found to have a longer filtration life, although in the filter of Comparative Example 5 a decrease in filtration accuracy due to pressure loss is not observed because membrane sheets are used in the intermediate layer.

Since the pleats filter of the present invention uses a mixed-fineness mixed filament yarn non-woven fiber bulk sheet having fiber diameter gradient from the top layer toward the bottom layer as the filter medium, surface clogging can be avoided by trapping ultra-fine particles also internal part of the filter medium, and the filtration life can be improved compared with the filters using filter media of uniform fiber diameters. The use of composite or mixed fibers comprising a high melting point resin and a low melting point resin is effective in minimizing the decrease in filtration accuracy when pressure loss increased compared with filter media using regular yarns whose fiber intersections are not heat-bonded. Also, the pleats filter of the present invention is effective in prolonging the filtration life by using it in the outer layer of a micro-porous membrane, such as a membrane sheet.

## Claims

1. A pleats filter produced by folding an aggregate of a mixed-fineness non-woven fabric comprising thermoplastic fibers of different fiber diameters, wherein the intersections of the sheet of said mixed-fineness non-woven fabric are heat-bonded, and the fiber diameters are graded from the top layer to the bottom layer of the sheet.

2. A pleats filter according to Claim 1, wherein said thermoplastic fiber is a composite fiber comprising a low melting point resin and a high melting point resin having a melting point difference of 10°C or more.

3. A pleats filter according to Claim 1 or 2, wherein said thermoplastic fiber is a mixed fiber.

4. A pleats filter according to any of Claims 1 through 3, wherein said sheet of the aggregate of a mixed-fineness non-woven fabric comprises fibers whose diameters range from 0.1 to 20 µm.

5. A pleats filter according to any of Claims 1 through 4, wherein the fiber diameter ratio of said sheet of the aggregate of a mixed-fineness non-woven fabric on the top layer to that on the bottom layer is 2 to 20.

6. A composite pleats filter comprising an aggregate of a mixed-fineness non-woven fabric according to any of Claims 1 through 5, which is laminated and integrated with at least one member selected from a group consisting of a micro-porous membrane, a porous glass fiber sheet, and a long-fiber non-woven fabric.
